(19) Europäisches Patentamt
European Patent Office
Office européen des brevets

(11) EP 4 300 622 A1

(12) EUROPEAN PATENT APPLICATION
published in accordance with Art. 153(4) EPC

(43) Date of publication:
03.01.2024 Bulletin 2024/01

(51) International Patent Classification (IPC):
H01M 4/133 $^{(2010.01)}$    H01M 4/134 $^{(2010.01)}$
H01M 4/36 $^{(2006.01)}$    H01M 4/38 $^{(2006.01)}$
H01M 4/48 $^{(2010.01)}$    H01M 4/587 $^{(2010.01)}$

(21) Application number: 22759525.3

(22) Date of filing: 18.02.2022

(52) Cooperative Patent Classification (CPC):
H01M 4/133; H01M 4/134; H01M 4/36; H01M 4/38;
H01M 4/48; H01M 4/587; Y02E 60/10

(86) International application number:
PCT/JP2022/006688

(87) International publication number:
WO 2022/181489 (01.09.2022 Gazette 2022/35)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 25.02.2021 JP 2021028420

(71) Applicant: Panasonic Energy Co., Ltd.
Osaka 570-8511 (JP)

(72) Inventor: URATA, Sho
Kadoma-shi, Osaka 571-0057 (JP)

(74) Representative: Novagraaf International SA
Chemin de l'Echo 3
1213 Onex, Geneva (CH)

(54) **NEGATIVE ELECTRODE FOR NONAQUEOUS ELECTROLYTE SECONDARY BATTERIES, AND NONAQUEOUS ELECTROLYTE SECONDARY BATTERY**

(57)    A negative electrode (30) for nonaqueous electrolyte secondary batteries according to the present invention comprises a negative electrode collector (32) and a negative electrode active material layer (34) that is provided on the negative electrode collector (32); and with respect to the negative electrode active layer (34), first active material layers (X) and second active material layers (Y) are alternately arranged on the negative electrode collector (32), the first and second active material layers containing, as a negative electrode active material, graphite particles A and graphite particles B, while being different from each other in the content of the graphite particles A relative to the total mass of the graphite particles A and the graphite particles B. the internal void fraction of the graphite particles A is lower than the internal void fraction of the graphite particles B; and the content of the graphite particles A in the first active material layers (X) is higher than the content of the graphite particles A in the second active material layers (Y). The ratio of the width Wx of the first active material layers (X) to the width Wy of the second active material layers (Y), namely Wx/Wy is 0.03 to 3.13.

Figure 2

**Description**

TECHNICAL FIELD

The present invention relates to a negative electrode for a non-aqueous electrolyte secondary battery, and to a non-aqueous electrolyte secondary battery.

BACKGROUND

Non-aqueous electrolyte secondary batteries which use carbon materials as a negative electrode active material are widely in use as secondary batteries of high energy densities. For a non-aqueous electrolyte secondary battery which is used as a power supply for an electric vehicle (EV) or the like, a superior charge/discharge cycle characteristic is desired.

Patent Literature 1 discloses a non-aqueous electrolyte secondary battery having a structure in which, in an active material layer of a band-shape negative electrode, a width-direction central portion having a small packing density and other portions having a large packing density are placed in a stripe shape over a current collector. With this structure, it becomes more difficult for decomposition of the electrolyte solution and degradation of the active material to occur at the width-direction center portion of the band-shape negative electrode, resulting in a superior charge/discharge cycle characteristic.

Patent Literature 2 discloses a non-aqueous electrolyte secondary battery having a structure in which, in order to improve the charge/discharge cycle, a groove is formed on a surface of a negative electrode active material layer, so that permeability of the electrolyte solution is improved.

Patent Literature 3 discloses a non-aqueous electrolyte secondary battery having a structure in which a first active material portion including active material particles with a large average particle size is partially formed over a negative electrode current collector along a plurality of lines across the negative electrode active material layer, and a second active material portion including active material particles with a small average particle size is formed covering the first active material portion. With this structure, the electrolyte solution can easily permeate to the center portion of the active material layer through the first active material portion having the active material particles with the large average particle size, resulting in a lower tendency of reduction of a capacity maintenance percentage under a low-temperature environment.

CITATION LIST

PATENT LITERATURE

   PATENT LITERATURE 1: JP 2000-90980 A
   PATENT LITERATURE 2: JP H9-298057 A
   PATENT LITERATURE 3: JP 2013-246900 A

SUMMARY

PROBLEM TO BE SOLVED

However, in the negative electrode for the non-aqueous electrolyte secondary battery and in the non-aqueous electrolyte secondary battery of the related art, there still remains a room of improvement from the viewpoint of realizing both superior charge/discharge cycle characteristic and higher capacity. In the structure disclosed in Patent Literature 1, because a region of low packing density is formed at a part of the active material layer of the negative electrode, the battery capacity is reduced.

In the structure disclosed in Patent Literature 2, a packing density of the active material is large at the portion of the negative electrode where the groove is formed, resulting in difficulty in improving the permeability of the electrolyte solution at the portion where the groove is formed. Thus, there is a room of improvement from the viewpoint of obtaining superior charge/discharge cycle characteristic.

In the structure disclosed in Patent Literature 3, the electrode plate surface of the negative electrode is covered by the second active material portion having the active materials with the small particle size, and movement of the electrolyte solution from within the negative electrode active material layer to the positive electrode is restricted, resulting in restriction of the improvement of the charge/discharge cycle characteristic. In addition, when, for higher capacity, an active material having large expansion/contraction such as silicon is used in combination with the active materials of the first active material portion having the large particle size, the number of contact points between the active material particles is reduced with the charge/discharge cycle. Because of this, it is difficult to secure the contact point with the expansion and contraction of silicon, that is, it is difficult to secure the conductivity. Thus, it is difficult to realize both superior charge/discharge cycle characteristic and higher capacity.

An advantage of the present disclosure lies in provision of a negative electrode for a non-aqueous electrolyte secondary battery and a non-aqueous electrolyte secondary battery which can realize both superior charge/discharge cycle characteristic and higher capacity.

SOLUTION TO PROBLEM

According to one aspect of the present disclosure, there is provided a negative electrode for a non-aqueous electrolyte secondary battery, the negative electrode including: a negative electrode current collector; and a negative electrode active material layer provided over the negative electrode current collector, wherein the negative electrode active material layer contains graphite particles A and graphite particles B as a negative electrode active material, and, in the negative electrode active material layer, a first active material layer X and a second active material layer Y, which differ from each other in a content of the graphite particles A with respect to a total mass of the graphite particles A and the graphite particles B, are alternately placed over the negative electrode current collector, an internal porosity of the graphite particles A is smaller than an internal porosity of the graphite particles B, and the content of the graphite particles A in the first active material layer X is larger than the content of the graphite particles A in the second active material layer Y, and a ratio Wx/Wy of a width Wx of the first active material layer X and a width Wy of the second active material layer Y is greater than or equal to 0.03 and less than or equal to 3.13.

According to another aspect of the present disclosure, there is provided a non-aqueous electrolyte secondary battery including the negative electrode for the non-aqueous electrolyte secondary battery according to one aspect of the present disclosure, a positive electrode, and a separator between the negative electrode for the non-aqueous electrolyte secondary battery and the positive electrode.

ADVANTAGEOUS EFFECTS

According to an aspect of the present disclosure, superior charge/discharge cycle characteristic and higher capacity can both be realized for a non-aqueous electrolyte secondary battery.

BRIEF DESCRIPTION OF DRAWINGS

FIG. 1 is a perspective diagram of a non-aqueous electrolyte secondary battery according to an embodiment of the present disclosure.
FIG. 2 is a schematic perspective diagram showing an electrode assembly including a negative electrode according to an embodiment of the present disclosure.
FIG. 3 is a cross-sectional diagram of a negative electrode according to an embodiment of the present disclosure.
FIG. 4 is a cross-sectional diagram of graphite particles in a negative electrode active material layer.
FIG. 5 is a diagram showing a relationship between a width ratio Wx/Wy of active material layers X and Y and a capacity maintenance percentage at a 300th cycle (cycle maintenance percentage) based on measurement results using non-aqueous electrolyte secondary batteries of Examples and Comparative Examples.
FIG. 6 is a schematic perspective diagram showing an electrode assembly including a negative electrode according to an alternative configuration of an embodiment of the present disclosure.

DESCRIPTION OF EMBODIMENTS

(Findings forming Basis for Present Disclosure)

In a negative electrode, a negative electrode active material is placed over a negative electrode current collector, and is compressed with a roller or the like, so as to increase a packing density and an energy density. During this compression, graphite particles collapse, and pores between the active materials are reduced, so that the packing density and the energy density are increased. On the other hand, in the negative electrode, during charging, the active material expands, and non-aqueous electrolyte present between the active materials are expelled to an outside of the active material layer. During discharging, the active material of the negative electrode contracts, and the non-aqueous electrolyte permeates and returns to the inside of the active material layer. However, when the pores between the active materials are made small for the higher capacity, it becomes more difficult for the non-aqueous electrolyte to permeate to the active material layer.

When graphite having a relatively small internal porosity is used as the negative electrode active material, it becomes possible to secure the pores between the active materials during the compression. With this configuration, the non-aqueous electrolyte can more quickly permeate in the charge/discharge cycle, and partial insufficiency of the non-aqueous electrolyte can be resolved. Because of this, superior charge/discharge cycle characteristic can be expected. On the other hand, when the graphite having the relatively small internal porosity is used, it is more difficult for the active material to collapse during the compression, resulting in difficulty in increasing the packing density. In addition, because a contact area with the surrounding active materials due to the compression is small, it is more difficult to maintain the contact with the surrounding active materials during the expansion and contraction of the active materials in the charging and discharging, and thus, due to reduction of the contact area, an electrical resistance is increased.

When graphite having a relatively large internal porosity is used as the negative electrode active material, because the active material is collapsed and deformed during the compression, the packing density can be increased. On the other hand, when the graphite having the relatively large internal porosity is used, the pores between the active materials are smaller, resulting in difficulty in permeation of the non-aqueous electrolyte in the charge/discharge cycle, and consequently, partial insufficiency of the non-aqueous electrolyte.

In addition, while the negative electrode current collector forming the negative electrode and the graphite particle placed thereover are bound together by a binder agent or the like, it is difficult for the graphite particles with low internal porosity to collapse when the electrode is formed, resulting in a tendency of reduction of binding property between the negative electrode current collector and the graphite particles. Because of this, depending on a state of charge, the graphite particles are easily peeled off from the negative electrode current collector. Thus, there may be cases where the reduction of the charge/discharge cycle characteristic cannot be effectively suppressed by simply using the graphite particles having low internal porosity.

The present inventor has found that, by alternately placing, with a ratio in an appropriate range, a layer containing a large amount of graphite particles with small internal porosity and a layer containing a large amount of graphite particles with large internal porosity, it becomes possible to enable the non-aqueous electrolyte to permeate to the layer containing a large amount of the graphite particles having the large internal porosity via the layer containing a large amount of the graphite particles having the small internal porosity, to thereby improve the charge/discharge cycle characteristic without reducing the packing density of the active material of the negative electrode active material layer, and to thereby realize both higher capacity and superior charge/discharge cycle characteristic. Based on the findings, the present inventors have conceived of a negative electrode for a non-aqueous electrolyte secondary battery according to an embodiment as described below.

A negative electrode for a non-aqueous electrolyte secondary battery according to an embodiment of the present disclosure comprises: a negative electrode current collector, and a negative electrode active material layer provided over the negative electrode current collector, wherein the negative electrode active material layer contains graphite particles A and graphite particles B as a negative electrode active material, and, in the negative electrode active material layer, a first active material layer X and a second active material layer Y, which differ from each other in a content of the graphite particles A with respect to a total mass of the graphite particles A and the graphite particles B, are alternately placed over the negative electrode current collector, an internal porosity of the graphite particles A is smaller than an internal porosity of the graphite particles B, and the content of the graphite particles A in the first active material layer X is larger than the content of the graphite particles A in the second active material layer Y, and a ratio Wx/Wy of a width Wx of the first active material layer X and a width Wy of the second active material layer Y is greater than or equal to 0.03 and less than or equal to 3.13.

An embodiment of the present disclosure will now be described in detail with reference to the drawings. The non-aqueous electrolyte secondary battery according to the present disclosure is not limited to an embodiment described below. In addition, the drawings referred to in the description of the embodiment are drawing schematically. In the following, an example case will be described in which the non-aqueous electrolyte secondary battery is a laminated battery, but the structure of the present disclosure is not limited to the laminated battery, and may alternatively be applied to various forms of batteries such as a rectangular battery having a flat shape, a circular cylindrical battery, or the like. Further, in the following description, a structure will be described in which an electrode assembly is of a layered type, but the structure of the present disclosure may alternatively be applied to battery forms having an electrode assembly of a wound type.

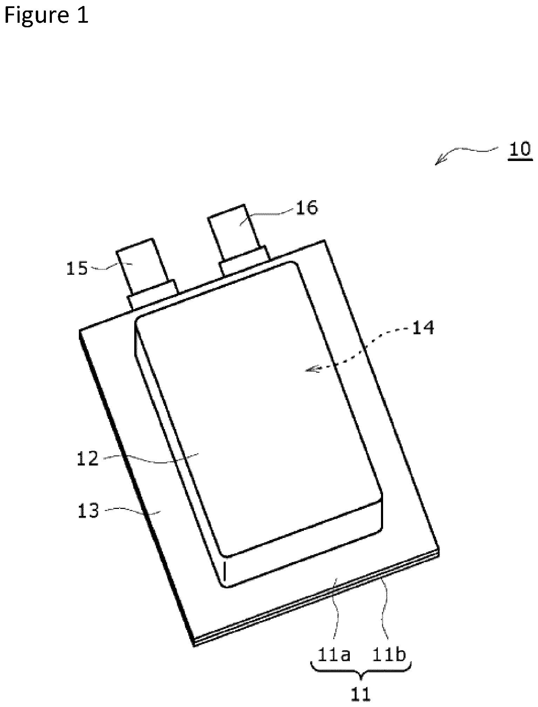

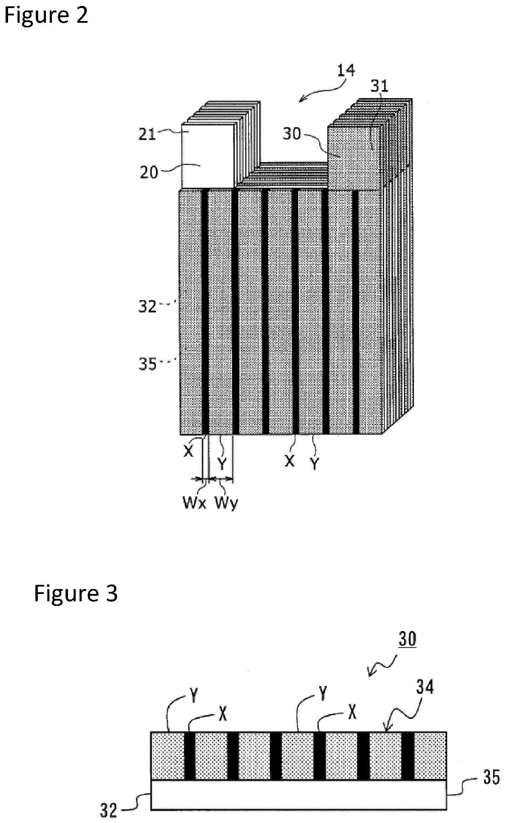

FIG. 1 is a cross-sectional diagram of a non-aqueous electrolyte secondary battery 10 according to an embodiment of the present disclosure. FIG. 2 is a schematic perspective diagram showing an electrode assembly 14. The non-aqueous electrolyte secondary battery 10 shown in FIG. 1 includes a battery casing 11 formed from two laminated films 11a and 11b. A power generation element to be described later (the electrode assembly 14 and an electrolyte) is housed in an internal space of a housing portion 12 formed between the laminated films 11a and 11b. On the battery casing 11, a sealing portion 13 is formed by joining outer circumference portions of the laminated films 11a and 11b, so that the internal space housing the power generation element is airtightly closed.

The battery casing 11 is of a pouch type, and is formed from the two laminated films 11a and 11b. In each of the laminated films 11a and 11b, for example, a resin layer is laminated over a surface of an aluminum foil. As a resin material forming the resin layer, for example, there may be exemplified polyethylene, polypropylene, polyethylene terephthalate, nylon, or the like. The resin layer may be of a one-layer structure, or two or more layers may be layered.

In the non-aqueous electrolyte secondary battery 10, a positive electrode lead 15 connected to a positive electrode 20 (FIG. 2) of the electrode assembly 14 to be described below, and a negative electrode lead 16 connected to a negative electrode 30 (FIG. 2) extend out from the battery casing 11. The non-aqueous electrolyte secondary battery 10 includes, as the power generation element, the electrode assembly 14 and the electrolyte (not shown). As described above, the power generation element is housed in the housing portion 12 airtightly sealed by the sealing portion 13. As the electrolyte, for example, a non-aqueous electrolyte is used which includes a non-aqueous solvent and an electrolyte salt such as lithium salt dissolved in the non-aqueous solvent.

As shown in FIG. 2, the electrode assembly 14 has a layered structure in which the positive electrode 20 and the negative electrode 30 are alternately layered with a separator (not shown) therebetween.

Current collector portions formed from non-coated portions of the positive electrodes 20 protrude in the same direction from one end portion in a width direction (left end of FIG. 2) of an end in a longitudinal direction (upper end of FIG. 2) of a positive electrode body (not shown) of a quadrangular shape forming a positive electrode current collector. The portions protruding from the one end in the longitudinal direction of the positive electrode body are layered, and a positive electrode current collector tab 21 integral with the electrode assembly 14 is formed. The positive electrode lead 15 (FIG. 1) is overlapped to one surface of the positive electrode current collector tab 21, and these elements are electrically connected to each other by being connected through welding or the like.

Current collector portions formed from non-applied portions of the negative electrode 30 protrude in the same direction from the other end portion in the width direction (right end of FIG. 2) of one end in the longitudinal direction (upper end of FIG. 2) of a negative electrode body 35 having a quadrangular shape forming a negative electrode current collector 32. The portions protruding from the one end in the longitudinal direction of the negative electrode body 35 are layered, and a negative electrode current collector tab 31 integral with the electrode assembly 14 is formed. The negative electrode lead 16 (FIG. 1) is overlapped to one surface of the negative electrode current collector tab 31, and these elements are electrically connected to each other by being connected through welding or the like.

Each constituting element of the non-aqueous electrolyte secondary battery 10 will now be described in detail.

[Negative Electrode]

FIG. 3 is a cross-sectional diagram of the negative electrode 30 according to an embodiment of the present disclosure. The negative electrode 30 is a negative electrode for a secondary battery, including the negative electrode current collector 32, and a negative electrode active material layer 34 provided over the negative electrode current collector 32.

For the negative electrode current collector 32, there may be employed, for example, a foil of metal stable within a potential range of the negative electrode such as copper, a film on a surface layer of which the metal is placed, or the like.

The negative electrode active material layer 34 contains graphite particles as a negative electrode active material. In addition, the negative electrode active material layer 34 desirably includes a binder agent or the like. The negative electrode 30 can be produced by, for example, preparing a negative electrode mixture slurry including the negative electrode active material, the binder agent, or the like, applying the negative electrode mixture slurry over the negative electrode current collector 32, drying the applied film to form the negative electrode active material layer 34, and then rolling the negative electrode active material layer 34. Details of the method of producing the negative electrode active material layer 34 will be described later.

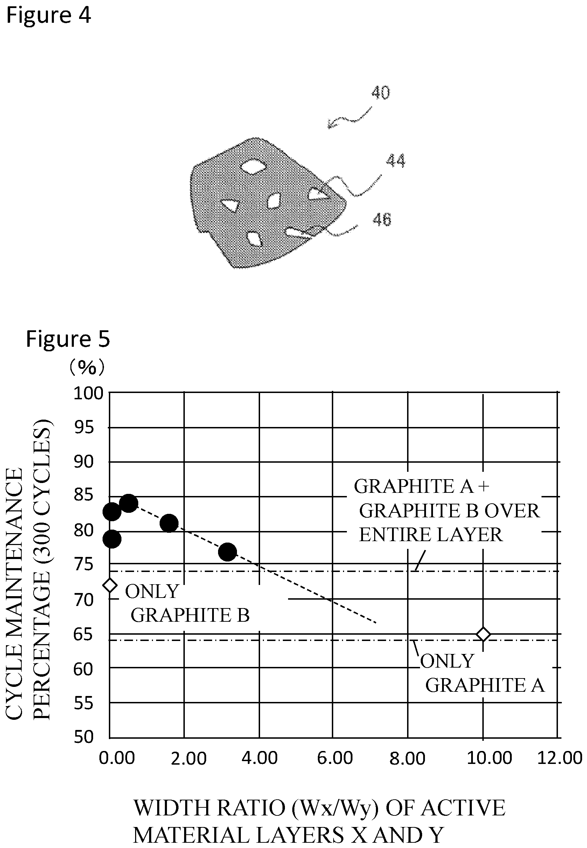

FIG. 4 is a cross-sectional diagram of graphite particles 40 in the negative electrode active material layer. As shown in FIG. 4, in the cross-sectional view of the graphite particles 40, the graphite particles 40 include pores 44 which are not connected from the inside of the particles to the surface of the particles and which are closed (hereinafter, "internal pores 44"), and pores 46 which are connected from the inside of the particles to the surface of the particles (hereinafter, "external pores 46").

The graphite particle 40 in the present embodiment include graphite particles A and graphite particle B, and an internal porosity of the graphite particles A is smaller than an internal porosity of the graphite particles B. For example, the graphite particles 40 include the graphite particles A having an internal porosity of less than or equal to 5% and graphite particles B having an internal porosity of 8%~20%. It is sufficient that, from the viewpoint of suppressing the reduction of the charge/discharge cycle characteristic or the like, the internal porosity of the graphite particles A is less than or equal to 5%, but the internal porosity of the graphite particles A is desirably 1%~5%, and is more desirably 3%~5%. It is sufficient that, from the viewpoint of suppressing the reduction of the charge/discharge cycle characteristic or the like, the internal porosity of the graphite particles B is 8%~20%, but the internal porosity of the graphite particles B is desirably 10%~18%, and is more desirably 12%~16%. Here, the internal porosity of the graphite particles is a two-dimensional value determined from a ratio of an area of the internal pores 44 of the graphite particles with respect to a cross-sectional area of the graphite particles. The internal porosity of the graphite particles can be determined with the following procedure.

<Measurement Method of Internal Porosity>

(1) A cross section of the negative electrode active material layer is exposed. As a method of exposing the cross section, for example, there may be exemplified a method in which a portion of the negative electrode is cut out, and machined with an ion milling device (for example, IM4000PLUS manufactured by Hitachi High-Tech Corporation), to expose the cross section of the negative electrode active material layer.
(2) Using a scanning electron microscope, a backscattered electron image of the exposed cross section of the negative electrode active material layer is captured. A magnification when the backscattered electron image is captured is, for example, 3000 times to 5000 times.
(3) The cross-sectional image obtained by the process described above is captured into a computer, and, using an image analyzing software (for example, ImageJ manufactured by National Institute of Health), a binarization process is applied, to obtain a binarization-processed image in which a cross section of the particles in the cross sectional image is converted to black color, and the pores existing in the cross section of the particles are converted to white color.
(4) In the binarization-processed image, graphite particles A and B having a particle size of 5 $\mu$m~50 $\mu$m are selected, and an area of the cross section of the graphite particles and an area of the internal pores existing in the cross section of the graphite particles are calculated. Here, the area of the cross section of the graphite particles refers to an area of a region surrounded by an outer circumference of the graphite particles, that is, an area of all portions of the cross section of the graphite particles. Among the pores existing in the cross section of the graphite particles, pores having a width of smaller than or equal to 3 $\mu$m may be assumed to be the internal pores, as the judgement of whether the pore is an internal pore or an external pore may be difficult in the image analysis. The internal porosity of the graphite particles ((area of internal pores in the cross section of graphite particles)* 100/(area of the cross section of the graphite particles)) is calculated from the calculated area of the cross section of the graphite particles and the calculated area of the internal pores on the cross section of the graphite particles. For each of the internal porosities of the graphite particles A and B, an average value of 10 particles of the graphite particles A or B is used.

The graphite particles A and B are produced, for example, through the following methods.

<Graphite Particles A having Internal Porosity of less than or equal to 5%>

For example, cokes (precursor) which are the primary raw material are ground to a predetermined size, and are aggregated with a binder agent. The resulting structure is baked at a temperature of greater than or equal to 2600°C, for graphitization, and is sieved, to obtain graphite particles A of a desired size. Here, the internal porosity can be adjusted to less than or equal to 5% by a particle size of the precursor after the grinding, the particle size of the precursor in the aggregated state, or the like. For example, an average particle size of the precursor after the grinding (a volume-equivalent median radius D50) may be within a range of 12 $\mu$m ~ 20 $\mu$m. When the internal porosity is to be reduced in the range of less than or equal to 5%, desirably, the particle size of the precursor after grinding is increased.

<Graphite Particles B having Internal Porosity of 8%~20%>

For example, cokes (precursor) which are the primary raw material are ground to a predetermined size, are aggregated with a binder agent, and are pressurized and shaped in a block form. Then, the block form structure is baked at a temperature of greater than or equal to 2600°C for graphitization. The graphitized block-form shaped structure is ground and sieved, to obtain graphite particles B of a desired size. Here, the internal porosity can be adjusted to a range of 8%~20% by an amount of a volatile ingredient added to the block-form shaped structure. When a part of the binder agent added to the cokes (precursor) evaporates during the baking, the binder agent may be used as the volatile ingredient. As such a binder agent, pitch may be exemplified.
No particular limitation is imposed on the graphite particles A and B used in the present embodiment, and there may be exemplified natural graphite, artificial graphite, or the like. From the viewpoint of ease of adjustment of the internal porosity, artificial graphite is desirable. A plane spacing ($d_{002}$) of a (002) plane of the graphite particles A and B in the present embodiment, measured by X-ray wide-angle diffraction, is, for example, desirably greater than or equal to 0.3354 nm, and is more desirably greater than or equal to 0.3357 nm, and is desirably smaller than 0.340 nm, and is more desirably smaller than or equal to 0.338 nm. Further, a crystallite size (Lc(002)) of the graphite particles A and B in the present embodiment, determined by X-ray diffraction, is, for example, desirably greater than or equal to 5 nm, and is more desirably greater than or equal to 10 nm, and is desirably smaller than or equal to 300 nm, and is more desirably smaller than or equal to 200 nm. When the plane spacing ($d_{002}$) and the crystallite size (Lc(002)) satisfy the above-described ranges, the battery capacity of the non-aqueous electrolyte secondary battery tends to become larger in comparison to cases in which the above-described ranges are not satisfied. Desirably, at least a part of the surface of the graphite particles A is coated with amorphous carbon. With such a configuration, a low-temperature characteristic of the non-aqueous electrolyte secondary battery can be improved.

In the present embodiment, the negative electrode active material layer 34 shown in FIG. 3 contains the graphite particles A and the graphite particles B as the negative electrode active material, and the internal porosity of the graphite particles A is smaller than the internal porosity of the graphite particles B. Further, in the negative electrode active material layer 34, a first active material layer X and a second active material layer Y having different contents of the graphite particles A with respect to a total mass of the graphite particles A and the graphite particles B are alternately placed over the negative electrode current collector 32, along a width direction (left-and-right direction of FIG. 3) of the negative electrode body 35 forming the negative electrode current collector 34. In FIGs. 2 and 3, the first active material layer X is shown with black color, and the second active material layer Y is shown with gray color. Each first active material layer X and each second active material layer Y extend along a longitudinal direction of the negative electrode body 35, and reach respective ends in the longitudinal direction of the negative electrode body 35. In particular, the content of the graphite particles A in the first active material layer X is larger than the content of the graphite particles A in the second active material layer Y. In addition, a ratio Wx/Wy of a width Wx of the first active material layer X and a width Wy of the second active material layer Y is greater than or equal to 0.03 and less than or equal to 3.13. With this configuration, in the charge/discharge cycle of the non-aqueous electrolyte secondary battery 10, the non-aqueous electrolyte can be permeated to the second active material layer Y containing a larger amount of the graphite particles with the larger internal porosity via the first active material layer X containing a larger amount of the graphite particles with the smaller internal porosity. Because of this, the partial insufficiency of the non-aqueous electrolyte in the negative electrode 30 can be resolved, and, thus, the charge/discharge cycle characteristic of the non-aqueous electrolyte secondary battery 10 can be improved without reducing the packing density of the negative electrode active material in the negative electrode active material layer 34. Therefore, higher capacity and superior charge/discharge cycle characteristic can both be realized in the non-aqueous electrolyte secondary battery 10.

In the present embodiment, it is sufficient that the first active material layer X has a larger content of the graphite particles A than the second active material layer Y, and the first active material layer X may have a structure containing only the graphite particles A, or each of the first active material layer X and the second active material layer Y or only the first active material layer X may contain both the graphite particles A and the graphite particles B. On the other hand, from the viewpoint of securing adhesiveness between the negative electrode current collector 32 and the graphite particles, the first active material layer X desirably contains both the graphite particles A and the graphite particles B. A range of mass ratio between the graphite particles A and the graphite particles B in the first active material layer X in this case is desirably 10:0~2:8 from the viewpoint of the charge/discharge cycle characteristic and the higher capacity, and is more desirably 6:4~3:7.

A specific method of setting the content of the graphite particles A to be larger in the first active material layer X than in the second active material layer Y will now be described. For example, first, a negative electrode mixture slurry for the first active material layer X is prepared by mixing a negative electrode active material including the graphite particles A (or graphite particles A and B as necessary), the binder agent, and a solvent such as water. Separately from this process, a negative electrode mixture slurry for the second active material layer Y is prepared by mixing a negative electrode active material including the graphite particles B (or graphite particles A and B as necessary) and having a smaller content of the graphite particles A than the negative electrode mixture slurry for the first active material layer X, the binder agent, and the solvent such as water. Then, the negative electrode mixture slurry for the first active material layer X and the negative electrode mixture slurry for the second active material layer Y are alternately applied over both surfaces of the negative electrode current collector along the planar direction, and are dried, to form the negative electrode active material layer 34.

The negative electrode active material may further include, in addition to the graphite particles A and B of the present embodiment, other materials which can reversible occlude and release lithium ions, and may include, for example, a Si-based material. As the Si-based material, for example, there may be exemplified Si, an alloy including Si, silicon oxides represented by SiOx (wherein x is 0.8 ~ 1.6), or the like. The Si-based material is a negative electrode material which can improve the battery capacity more than the graphite particles, but is inferior in the charge/discharge cycle characteristic because the Si-based material has a larger volume expansion due to charging and discharging. However, as it is not necessary to set the particle size of the graphite particles to an excessively large size in the negative electrode active material layer having the negative electrode active material including the graphite particles A and B and the Si-based material, the contact point with the Si-based material can be increased, and, consequently, it becomes easier to secure a contact point during the expansion and contraction of the Si-based material, that is, it becomes easier to secure conductivity. With such a configuration, the reduction of the charge/discharge cycle characteristic can be effectively suppressed. A content of the Si-based material is, for example, desirably 1 mass%~10 mass% with respect to the mass of the negative electrode active material, and is more desirably 3 mass%~7 mass%, from the viewpoints of improvement of the battery capacity and suppression of reduction of the charge/discharge cycle characteristic.

Examples of other materials which can reversibly occlude and release the lithium ions include metals which form an alloy with lithium such as tin (Sn), or an alloy or an oxide including the metal element such as Sn. The negative electrode active material may include these other materials, and a content of these other materials is, for example, desirably less than or equal to 10 mass% with respect to the mass of the negative electrode active material.

As the binder agent, there may be exemplified, for example, a fluororesin, PAN, a polyimide-based resin, an acrylic resin, a polyolefin-based resin, styrene-butadiene rubber (SBR), nitrile-butadiene rubber (NBR), carboxymethyl cellulose (CMC) or a salt thereof, polyacrylic acid (PAA) or a salt thereof (such as PAA-Na, PAA-K, or a fractional neutralization type salt), polyvinyl alcohol (PVA), or the like. These materials may be employed as a single material or a combination of two or more of these materials may be used.

[Positive Electrode]

The positive electrode 20 is formed from a positive electrode current collector such as, for example, a metal foil, and a positive electrode active material layer formed over the positive electrode current collector. For the positive electrode current collector, there may be employed a foil of a metal which is stable within a potential range of the positive electrode such as aluminum, a film on a surface layer of which the metal is placed, or the like. The positive electrode active material layer includes, for example, a positive electrode active material, a binder agent, an electrically conductive material, or the like.

The positive electrode 20 can be produced by, for example, applying a positive electrode mixture slurry including the positive electrode active material, the binder agent, the electrically conductive material, or the like over the positive electrode current collector, drying the applied film to form the positive electrode active material layer, and then rolling the positive electrode active material layer.

As the positive electrode active material, there may be exemplified a lithium-transition metal oxide containing transition metal elements such as Co, Mn, and Ni. As the lithium-transition metal oxide, there may be exemplified, for example, $Li_xCoO_2$, $Li_xNiO_2$, $Li_xMnO_2$, $Li_xCo_yNi_{1-y}O_2$, $Li_xCo_yM_{1-y}O_z$, $Li_xNi_{1-y}M_yO_z$, $Li_xMn_2O_4$, $Li_xMn_{2-y}M_yO_4$, $LiMPO_4$, and $Li_2MPO_4F$ (wherein M is at least one of Na, Mg, Sc, Y, Mn, Fe, Co, Ni, Cu, Zn, Al, Cr, Pb, Sb, and B, $0<x\leq1.2$, $0<y\leq0.9$, and $2.0\leq z\leq2.3$). These materials may be employed as a single material or a mixture of a plurality of these materials may be employed. From the viewpoint of increasing the capacity of the non-aqueous electrolyte secondary battery, the positive electrode active material desirably includes a lithium-nickel composite oxide such as $Li_xNiO_2$, $Li_xCo_yNi_{1-y}O_2$, and $Li_xNi_{1-y}M_yO_z$ (wherein M is at least one of Na, Mg, Sc, Y, Mn, Fe, Co, Ni, Cu, Zn, Al, Cr, Pb, Sb, and B, $0<x\leq1.2$, $0<y\leq0.9$, and $2.0\leq z\leq2.3$).

As the electrically conductive material, there may be exemplified, for example, carbon-based particles such as carbon black (CB), acetylene black (AB), Ketjenblack, graphite, or the like. These materials may be used as a single material or a combination of two or more of these materials may be used.

As the binder agent, there may be exemplified, for example, a fluororesin such as polytetrafluoroethylene (PTFE), polyvinylidene fluoride (PVdF), polyacrylonitrile (PAN), a polyimide-based resin, an acrylic resin, a polyolefin-based resin, or the like. These materials may be used as a single material or a combination of two or more of these materials may be used.

[Separator]

For the separator, for example, a porous sheet having an ion permeability and an insulating property is employed. Specific examples of the porous sheet include a microporous thin film, a woven fabric, a non-woven fabric, or the like. As a material forming the separator, there may be exemplified an olefin-based resin such as polyethylene and polypropylene, cellulose, or the like. Alternatively, the separator may be a layered assembly having a cellulose fiber layer, and a thermoplastic resin fiber layer such as an olefin-based resin. Alternatively, the separator may be a multilayer separator including a polyethylene layer and a polypropylene layer, or a structure may be employed in which a material such as an aramid-based resin, ceramic, or the like is applied over a surface of the separator.

[Non-aqueous Electrolyte]

The non-aqueous electrolyte includes a non-aqueous solvent and an electrolyte salt dissolved in the non-aqueous solvent. For the non-aqueous solvent, for example, esters, ethers, nitriles such as acetonitrile, amides such as dimethylformamide, or a mixture solvent of two or more of these solvents may be employed. The non-aqueous solvent may include a halogen-substituted product in which at least a part of hydrogens of the solvent described above is substituted with a halogen atom such as fluorine.

Examples of the esters include cyclic carbonate esters such as ethylene carbonate (EC), propylene carbonate (PC), and butylene carbonate, chain carbonate esters such as dimethyl carbonate (DMC), ethylmethyl carbonate (EMC), diethyl carbonate (DEC), methylpropyl carbonate, ethylpropyl carbonate, and methylisopropyl carbonate, cyclic carboxylate esters such as γ-butyrolactone and γ-valerolactone, and chain carboxylate esters such as methyl acetate, ethyl acetate, propyl acetate, methyl propionate (MP), and ethyl propionate.

Examples of the ethers include cyclic ethers such as 1,3-dioxolane, 4-methyl-1,3-dioxolane, tetrahydrofuran, 2-methyl tetrahydrofuran, propylene oxide, 1,2-butylene oxide, 1,3-dioxane, 1,4-dioxane, 1,3,5-trioxane, furan, 2-methyl furan, 1,8-cineol, and crown ether, and chain ethers such as 1,2-dimethoxy ethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxy benzene, 1,2-diethoxy ethane, 1,2-dibutoxy ethane, diethylene glycol dimethyl ether, diethylene glycol diethyl ether, diethylene glycol dibutyl ether, 1,1-dimethoxy methane, 1,1-diethoxy ethane, triethylene glycol dimethyl ether, and tetraethylene glycol dimethyl ether.

As the halogen-substituted product, desirably, a fluorinated cyclic carbonate ester such as fluoroethylene carbonate (FEC), a fluorinated chain carbonate ester, or a fluorinated chain carboxylate ester such as fluoromethyl propionate (FMP) is employed.

The electrolyte salt is desirably a lithium salt. Examples of the lithium salt include $LiBF_4$, $LiClO_4$, $LiPF_6$, $LiAsF_6$, $LiSbF_6$, $LiAlCl_4$, LiSCN, $LiCF_3SO_3$, $LiCF_3CO_2$, $Li(P(C_2O_4)F_4)$, $LiPF_{6-x}(C_nF_{2n+1})_x$ (wherein $1<x<6$, n is 1 or 2), $LiB_{10}Cl_{10}$, LiCl, LiBr, LiI, lithium chloroborane, lithium lower aliphatic carboxylate, borate salts such as $Li_2B_4O_7$ and $Li(B(C_2O_4)F_2)$, and imide salts such as $LiN(SO_2CF_3)_2$, and $LiN(C_lF_{2l+1}SO_2)(C_mF_{2m+1}SO_2)$ (wherein each of l and m is an integer greater than or equal to 1). As the lithium salt, these materials may be used as a single material or a mixture of a plurality of these materials may be used. Of these, $LiPF_6$ is desirably used, from the viewpoints of ion conductivity, electrochemical stability, or the like. A concentration of the lithium salt is desirably set to 0.8 ~ 1.8 mol per 1 L of the solvent.

EXAMPLES

The present disclosure will now be described in further detail with reference to Examples. The present disclosure, however, is not limited to the Examples.

<Example 1>

[Production of Positive Electrode]

As the positive electrode active material, aluminum-containing lithium nickel-cobaltate ($LiNi_{0.88}Co_{0.09}Al_{0.03}O_2$) was employed. 100 parts by mass of the positive electrode active material, 0.8 parts by mass of carbon black serving as the electrically conductive material, and 0.7 parts by mass of polyvinylidene fluoride powder serving as the binder agent were mixed, and a suitable amount of N-methyl-2-pyrrolidone (NMP) was added, to prepare a positive electrode mixture slurry. The slurry was applied over both surfaces of a positive electrode current collector formed from an aluminum foil (having a thickness of 15 μm) by a doctor blade method, and the applied film was dried. In this process, the amount of application of the mixture was set to a total of 560 g/m² for the two surfaces. The applied film was then rolled with a rolling roller, and the resulting structure was cut into a predetermined electrode size, to produce a positive electrode in which a positive electrode active material layer was formed over both surfaces of the positive electrode current collector. The rolling process was applied so that a thickness of the electrode plate was 161 μm.

[Production of Graphite Particles A]

Cokes were ground until the average particle size (median size D50) was 12 μm, pitch serving as the binder agent was added to the ground cokes, and the cokes were aggregated until the average particle size (median size D50) was 17 μm. The aggregate was baked at a temperature of 2800°C for graphitization, and was sieved using a sieve of 250 meshes, to produce graphite particles A having an average particle size (median size D50) of 23 μm.

[Production of Graphite Particles B]

Cokes were ground until the average particle size (median size D50) was 15 $\mu$m, pitch serving as the binder agent was added to the ground cokes, and the cokes were aggregated. An isotropic pressure was applied to the aggregate, to produce a block-form shaped structure having a density of 1.6 g/cm$^3$ ~ 1.9 g/cm$^3$. The block-form shaped structure was baked at a temperature of 2800°C for graphitization, and the graphitized block form shaped structure was ground and sieved using a sieve of 250 meshes, to produce graphite particles B having an average particle size (median size D50) of 23 $\mu$m.

[Production of Negative Electrode]

47.5 parts by mass of the graphite particles A, 47.5 parts by mass of the graphite particles B, and 5 parts by mass of SiO were mixed, and the mixture was set as a negative electrode active material G1 for a first active material layer X. The negative electrode active material G1, 1 part by mass of carboxymethyl cellulose (CMC), and water were mixed. This mixture, 1 part by mass of styrene-butadiene copolymer rubber (SBR), and water were mixed, to prepare a negative electrode mixture slurry for the first active material layer X. 95 parts by mass of the graphite particles B, and 5 parts by mass of SiO were mixed, and the mixture was set as a negative electrode active material G2 for a second active material layer Y. The negative electrode active material G2, 1 part by mass of carboxymethyl cellulose (CMC), and water was mixed. This mixture, 1 part by mass of styrene-butadiene copolymer rubber (SBR), and water were mixed, to prepare a negative electrode mixture slurry for the second active material layer Y.
Using die coater, the negative electrode mixture slurry for the first active material layer X and the negative electrode mixture slurry for the second active material layer Y were simultaneously applied over both surfaces of a negative electrode current collector formed from a copper foil in a repetitious manner and respectively with an application width of 0.1 mm and an application width of 3.2 mm, and were dried. In this process, the amount of application of the mixture was set to a total of 282 g/m$^2$ for the two surfaces. The applied films were then rolled by a rolling roller, and the resulting structure was cut into a predetermined electrode size, to produce a negative electrode in which a negative electrode active material layer was formed over both surfaces of the negative electrode current collector. The rolling was applied such that a thickness of the electrode plate was 161 $\mu$m.

[Preparation of Non-aqueous Electrolyte]

To a non-aqueous solvent in which ethylene carbonate (EC), dimethyl carbonate (DMC), and ethylmethl carbonate (EMC) were mixed in a volume ratio of 2:6:2, 2 parts by mass of vinylene carbonate (VC) was added, LiPF$_6$ serving as an electrolyte was dissolved with a concentration of 1.3 mol/L. The non-aqueous electrolyte was thus prepared.

[Production of Non-aqueous Electrolyte Secondary Battery]

5 positive electrodes and 6 negative electrodes were layered with two of the negative electrodes positioned at the outer side and with a separator formed from a polyethylene microporous film and having a thickness of 20 $\mu$m interposed between the positive electrode and the negative electrode, to produce an electrode assembly of a layered type. After a positive electrode lead was attached to a positive electrode current collector tab and a negative electrode lead was attached to a negative electrode current collector tab, the electrode assembly and 3.5 g of the non-aqueous electrolyte were housed in a battery casing formed from aluminum laminated films, and an opening of the battery casing was sealed, to produce a non-aqueous electrolyte secondary battery of Example 1.

<Example 2>

A non-aqueous electrolyte secondary battery of Example 2 was produced in a manner similar to Example 1 except that the negative electrode mixture slurries were applied over both surfaces of the negative electrode current collector in a repetitious manner with the application width of the negative electrode mixture slurry for the first active material layer X being set at 0.2 mm, and the application width of the negative electrode mixture slurry for the second active material layer Y being set at 3.1 mm.
<Example 3>
A non-aqueous electrolyte secondary battery of Example 3 was produced in a manner similar to Example 1 except that the negative electrode mixture slurries were applied over both surfaces of the negative electrode current collector in a repetitious manner with the application width of the negative electrode mixture slurry for the first active material layer X being set at 1.0 mm, and the application width of the negative electrode mixture slurry for the second active material layer Y being set at 2.3 mm.

<Example 4>

A non-aqueous electrolyte secondary battery of Example 4 was produced in a manner similar to Example 1 except that the negative electrode mixture slurries were applied over both surfaces of the negative electrode current collector in a repetitive manner with the application width of the negative electrode mixture slurry for the first active material layer X being set at 2.0 mm, and the application width of the negative electrode mixture slurry for the second active material layer Y being set at 1.3 mm.

<Example 5>

A non-aqueous electrolyte secondary battery of Example 5 was produced in a manner similar to Example 1 except that the negative electrode mixture slurries were applied over both surfaces of the negative electrode current collector in a repetitive manner with the application width of the negative electrode mixture slurry for the first active material layer X being set at 2.5 mm, and the application width of the negative electrode mixture slurry for the second active material layer Y being set at 0.8 mm.

<Comparative Example 1>

A non-aqueous electrolyte secondary battery of Comparative Example 1 was produced in a manner similar to Example 1 except that the negative electrode mixture slurries were applied over both surfaces of the negative electrode current collector in a repetitive manner with the application width of the negative electrode mixture slurry for the first active material layer X being set at 3.0 mm, and the application width of the negative electrode mixture slurry for the second active material layer Y being set at 0.3 mm.

<Comparative Example 2>

A non-aqueous electrolyte secondary battery of Comparative Example 2 was produced in a manner similar to Example 1 except that only the negative electrode mixture slurry for the second active material layer Y was applied over both surfaces of the negative electrode current collector. In this process, the application width of the negative electrode mixture slurry was 29.7 mm.

<Comparative Example 3>

A non-aqueous electrolyte secondary battery of Comparative Example 3 was produced in a manner similar to Example 1 except that, in the production of the negative electrode mixture slurry, 95 parts by mass of graphite particles A and 5 parts by mass of SiO were mixed to produce a negative electrode active material G3 for a third active material layer Z, the negative electrode active material G3, 1 part by mass of carboxymethyl cellulose (CMC), and water were mixed, this mixture, 1 part by mass of styrene-butadiene copolymer rubber (SBR), and water were mixed, to prepare a negative electrode mixture slurry for the third active material layer Z, and only the negative electrode mixture slurry for the third active material layer Z was applied over both surfaces of the negative electrode current collector. In this process, the application width of the negative electrode mixture slurry was 29.7 mm.

<Comparative Example 4>

A non-aqueous electrolyte secondary battery of Comparative Example 4 was produced in a manner similar to Example 1 except that only the negative electrode mixture slurry for the first active material layer X was applied over both surfaces of the negative electrode current collector. In this process, the application width of the negative electrode mixture slurry was 29.7 mm.

[Measurement of Capacity Maintenance Percentage at Charge/Discharge Cycle]

Under an environmental temperature of 25°C, the non-aqueous electrolyte secondary batteries of Examples and Comparative Examples were charged with a constant current of 1 C (4600 mA) until a voltage reached 4.2 V, and were then charged with a constant voltage of 4.2 V until the current reached 1/50 C. Then, the non-aqueous electrolyte secondary batteries were discharged with a constant current of 0.5 C until the voltage reached 2.5 V. With these charging and discharging as one cycle, 300 cycles of charging and discharging were performed. A capacity maintenance percentage at the charge/discharge cycle was determined by the following formula for each of the non-aqueous electrolyte secondary batteries of Examples and Comparative Examples.

$$(\text{Capacity maintenance percentage}) = ((\text{discharge capacity at 300th cycle})/(\text{discharge}$$

$$\text{capacity at 1st cycle})) \times 100$$

TABLE 1 summarizes results of the capacity maintenance percentages at the charge/discharge cycle for the non-aqueous electrolyte secondary batteries of Examples and Comparative Examples. A higher value of the capacity maintenance percentage at the charge/discharge cycle indicates better charge/discharge cycle characteristic. FIG. 5 shows a relationship between the width ratio Wx/Wy of the first active material layer X and the second active material layer Y, and the capacity maintenance percentage at the 300th cycle (cycle maintenance percentage), based on the measurement results of the non-aqueous electrolyte secondary batteries of Examples and Comparative Examples. In FIG. 5, black circles show Examples 1 to 5, and white rhombi show Comparative Examples 1 to 2.

[TABLE 1]

| | FIRST ACTIVE MATERIAL LAYER X | | SECOND ACTIVE MATERIAL LAYER Y | | WIDTH RATIO (Wx/Wy) BETWEEN ACTIVE MATERIAL LAYERS X AND Y | CHARGE/ DISCHARGE CYCLE CAPACITY MAINTENANCE PERCENTAGE |
|---|---|---|---|---|---|---|
| | ACTIVE MATERIAL | WIDTH | ACTIVE MATERIAL | WIDTH | | |
| EXAMPLE 1 | GRAPHITE A+ GRAPHITE B | 0.1 | GRAPHITE B | 3.2 | 0.03 | 79% |
| EXAMPLE 2 | GRAPHITE A+ GRAPHITE B | 0.2 | GRAPHITE B | 3.1 | 0.06 | 83% |
| EXAMPLE 3 | GRAPHITE A+ GRAPHITE B | 1 | GRAPHITE B | 2.3 | 0.43 | 84% |
| EXAMPLE 4 | GRAPHITE A+ GRAPHITE B | 2 | GRAPHITE B | 1.3 | 1.54 | 81% |
| EXAMPLE 5 | GRAPHITE A+ GRAPHITE B | 2.5 | GRAPHITE B | 0.8 | 3.13 | 77% |
| | | | | | | |
| COMPARATIVE EXAMPLE 1 | GRAPHITE A+ GRAPHITE B | 3.0 | GRAPHITE B | 0.3 | 10.00 | 65% |
| COMPARATIVE EXAMPLE 2 | GRAPHITE A+ GRAPHITE B | 0.0 | GRAPHITE B | 29.7 | 0.00 | 72% |
| COMPARATIVE EXAMPLE 3 | GRAPHITE A (WIDTH OF 29.7 mm) | | | | - | 64% |

(continued)

|  | FIRST ACTIVE MATERIAL LAYER X | | SECOND ACTIVE MATERIAL LAYER Y | | WIDTH RATIO (Wx/Wy) BETWEEN ACTIVE MATERIAL LAYERS X AND Y | CHARGE/ DISCHARGE CYCLE CAPACITY MAINTENANCE PERCENTAGE |
| --- | --- | --- | --- | --- | --- | --- |
|  | ACTIVE MATERIAL | WIDTH | ACTIVE MATERIAL | WIDTH | | |
| COMPARATIVE EXAMPLE 4 | GRAPHITE A+ GRAPHITE B | 29.7 | GRAPHITE B | 0 | - | 74% |

As can be understood from TABLE 1 and FIG. 5, when the width ratio Wx/Wy is set to greater than or equal to 0.03 and less than or equal to 3.13 as in Examples 1 to 5, the capacity maintenance percentage at the charge/discharge cycle was improved in comparison to Comparative Examples 1 to 4. On the other hand, in Comparative Example 1 in which the width ratio Wx/Wy is 10.00, the cycle maintenance percentage was approximately equal to that of Comparative Example 3 in which only the graphite particles A were used in the negative electrode active material layer, and no significant improvement effect was observed. In addition, in Examples 2 to 4 having the width ratio Wx/Wy of greater than or equal to 0.06 and less than or equal to 1.6, the cycle maintenance percentages were greater than or equal to 80%, and a significant improvement effect of the charge/discharge cycle characteristic was confirmed. On the other hand, based on FIG. 5, it can be deduced that the reduction of the cycle maintenance percentage becomes significant when the width ratio Wx/Wy exceeds 4.0. The reason for this can be deduced to be that, when the width ratio Wx/Wy exceeds 4.0, the influence of degradation of the capacity due to the increase of the first active material layer X becomes more significant than the improvement effect of the cycle maintenance percentage due to the permeability improvement effect of the non-aqueous electrolyte in the negative electrode active material layer.

Further, the first active material layer X contains both the graphite particles A and the graphite particles B. In this configuration, because the layer contains the graphite particles B which moderately collapse during the electrode formation, adhesiveness between the negative electrode current collector and the graphite particles can be secured in comparison to the case when the first active material layer X is formed with only the graphite particles A which are difficult to collapse. As a result, it becomes more difficult for the graphite particles to peel off from the negative electrode current collector in the charge/discharge cycle, and a superior charge/discharge cycle characteristic can be more easily secured.

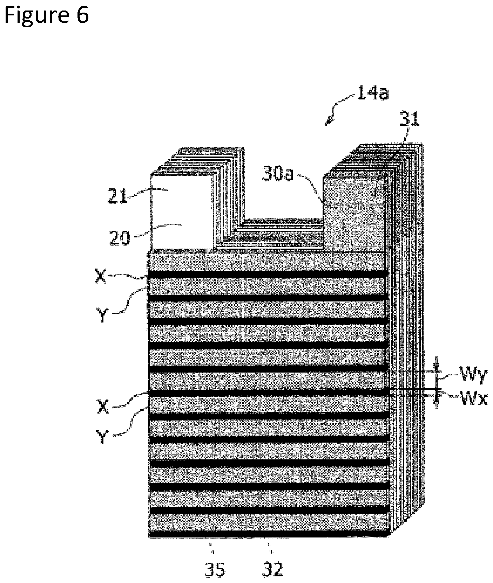

FIG. 6 is a schematic perspective diagram showing an electrode assembly 14a including a negative electrode 30a according to an alternative configuration of an embodiment of the present disclosure. In the structure of this configuration, unlike the structure of the embodiment shown in FIGs. 1 to 4, the first active material layer X and the second active material layer Y are alternately placed over the negative electrode current collector 32 along a longitudinal direction (up-and-down direction of FIG. 6) of the negative electrode body 35 forming the negative electrode current collector 32. Each first active material layer X and each the second active material layer Y extend in a width direction (left-and-right direction of FIG. 6) of the negative electrode body 35, and reach ends in the width direction of the negative electrode body 35. The content of the graphite particles A in the first active material layer X is larger than the content of the graphite particles A in the second active material layer Y. In addition, the width ratio Wx/Wy of the width Wx of the first active material layer X and the width Wy of the second active material layer Y is greater than or equal to 0.03 and less than or equal to 3.13. In the case of the present configuration also, similar to the structure shown in FIGs. 1 to 4, superior charge/discharge cycle characteristic and higher capacity can both be realized for the non-aqueous electrolyte secondary battery. In the present configuration, the other structures and operations are similar to those of the structure shown in FIGs. 1 to 4.

In the description of the structure of FIGs. 1 to 4 and the structure of FIG. 6 above, a structure is exemplified in which the electrode assembly is of the layered type, but alternatively, the electrode assembly may be of a wound type in which the positive electrode and the negative electrode are wound with the separator therebetween. In this case also, the first active material layer X and the second active material layer Y are alternately placed over the negative electrode current collector in such a manner that the ratio Wx/Wy is greater than or equal to 0.03 and less than or equal to 3.13. With this configuration, it is possible to realize both superior charge/discharge cycle characteristic and higher capacity of the non-aqueous electrolyte secondary battery.

REFERENCE SIGNS LIST

10 non-aqueous electrolyte secondary battery, 11 battery casing, 11a, 11b, laminated film, 12 housing portion, 13 sealing portion, 14 electrode assembly, 15 positive electrode lead, 16 negative electrode lead, 20 positive electrode, 21 positive electrode current collector tab, 30 negative electrode, 31 negative electrode current collector tab, 32 negative electrode current collector, 34 negative electrode active material layer, 35 negative electrode body, 40 graphite particles, 44 internal pore, 46 external pore.

**Claims**

1. A negative electrode for a non-aqueous electrolyte secondary battery, the negative electrode comprising:

   a negative electrode current collector; and
   a negative electrode active material layer provided over the negative electrode current collector, wherein
   the negative electrode active material layer contains graphite particles A and graphite particles B as a negative electrode active material, and, in the negative electrode active material layer, a first active material layer X and a second active material layer Y, which differ from each other in a content of the graphite particles A with respect to a total mass of the graphite particles A and the graphite particles B, are alternately placed over the negative electrode current collector,
   an internal porosity of the graphite particles A is smaller than an internal porosity of the graphite particles B, and the content of the graphite particles A in the first active material layer X is larger than the content of the graphite particles A in the second active material layer Y, and
   a ratio Wx/Wy of a width Wx of the first active material layer X and a width Wy of the second active material layer Y is greater than or equal to 0.03 and less than or equal to 3.13.

2. The negative electrode for the non-aqueous electrolyte secondary battery according to claim 1, wherein the internal porosity of the graphite particles A is greater than or equal to 5%, and the internal porosity of the graphite particles B is greater than or equal to 8% and less than or equal to 20%.

3. The negative electrode for the non-aqueous electrolyte secondary battery according to claim 1 or 2, wherein the ratio Wx/Wy of the width Wx of the first active material layer X and the width Wy of the second active material layer Y is greater than or equal to 0.06 and less than or equal to 1.6.

4. The negative electrode for the non-aqueous electrolyte secondary battery according to any one of claims 1 to 3, wherein
   the negative electrode active material layer further includes a Si-based material.

5. A non-aqueous electrolyte secondary battery comprising:

   the negative electrode for the non-aqueous electrolyte secondary battery according to any one of claims 1 to 4;
   a positive electrode; and
   a separator between the negative electrode for the non-aqueous electrolyte secondary battery and the positive electrode.

Figure 1

Figure 2

Figure 3

# Figure 4

# Figure 5

WIDTH RATIO (Wx/Wy) OF ACTIVE
MATERIAL LAYERS X AND Y

Figure 6

## INTERNATIONAL SEARCH REPORT

International application No.

**PCT/JP2022/006688**

### A. CLASSIFICATION OF SUBJECT MATTER

*H01M 4/133*(2010.01)i; *H01M 4/134*(2010.01)i; *H01M 4/36*(2006.01)i; *H01M 4/38*(2006.01)i; *H01M 4/48*(2010.01)i; *H01M 4/587*(2010.01)i

FI:   H01M4/133; H01M4/36 D; H01M4/38 Z; H01M4/134; H01M4/587; H01M4/48

According to International Patent Classification (IPC) or to both national classification and IPC

### B. FIELDS SEARCHED

Minimum documentation searched (classification system followed by classification symbols)

H01M4/133; H01M4/134; H01M4/36; H01M4/38; H01M4/48; H01M4/587

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2020/175361 A1 (SANYO ELECTRIC CO) 03 September 2020 (2020-09-03) | 1-5 |
| A | WO 2020/044930 A1 (PANASONIC IP MAN CO LTD) 05 March 2020 (2020-03-05) | 1-5 |
| A | WO 2019/239948 A1 (PANASONIC IP MAN CO LTD) 19 December 2019 (2019-12-19) | 1-5 |
| A | WO 2019/239652 A1 (SANYO ELECTRIC CO) 19 December 2019 (2019-12-19) | 1-5 |

☐ Further documents are listed in the continuation of Box C. ☑ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **04 April 2022** | **19 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/006688**

| Patent document cited in search report | | | Publication date (day/month/year) | Patent family member(s) | | | Publication date (day/month/year) |
|---|---|---|---|---|---|---|---|
| WO | 2020/175361 | A1 | 03 September 2020 | (Family: none) | | | |
| WO | 2020/044930 | A1 | 05 March 2020 | CN | 112640157 | A | |
| WO | 2019/239948 | A1 | 19 December 2019 | EP | 3809494 | A1 | |
| | | | | CN | 112292774 | A | |
| WO | 2019/239652 | A1 | 19 December 2019 | US | 2021/0159489 | A1 | |
| | | | | EP | 3809492 | A1 | |
| | | | | CN | 112292773 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000090980 A
- JP H9298057 A
- JP 2013246900 A